# EUROPÄISCHE PATENTSCHRIFT

(11) **EP 2 603 678 B1**
(45) Veröffentlichungstag und Bekanntmachung des Hinweises auf die Patenterteilung: **26.11.2014**
(21) Anmeldenummer: 11741240.3
(22) Anmeldetag: 10.08.2011
(51) Int. Cl.: F01N 3/021

(54) **VERFAHREN UND VORRICHTUNG ZUR VERRINGERUNG VON RUSSPARTIKELN IM ABGAS EINER VERBRENNUNGSKRAFTMASCHINE**
METHOD AND APPARATUS FOR REDUCING SOOT PARTICLES IN THE EXHAUST GAS OF AN INTERNAL COMBUSTION ENGINE
PROCÉDÉ ET DISPOSITIF POUR RÉDUIRE LES PARTICULES DE SUIE DANS LES GAZ D'ÉCHAPPEMENT D'UN MOTEUR À COMBUSTION INTERNE

(30) Priorität: 13.08.2010 DE 102010034251
(43) Veröffentlichungstag der Anmeldung: 19.06.2013
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); VORSMANN, Christian, 51105 Köln (DE); HODGSON, Jan, 53840 Troisdorf (DE)
(74) Vertreter: Rössler, Matthias
(86) Internationale Anmeldenummer: PCT/EP2011/063761
(87) Internationale Veröffentlichungsnummer: WO 2012/020049

(56) Entgegenhaltungen:
- EP-A1- 1 840 938
- JP-A- 2003 172 123

## Beschreibung

Gegenstand der vorliegenden Erfindung sind ein Verfahren und eine Vorrichtung zur Verringerung von Rußpartikeln im Abgas einer Verbrennungskraftmaschine.

Verbrennungskraftmaschinen, die mit Kohlenwasserstoffen als Kraftstoff betrieben werden, emittieren ein Abgas, das unter anderem auch kohlenstoffhaltige Partikel enthält. Diese kohlenstoffhaltigen Partikel weisen verschiedene Größen auf, deren Verteilung von vielen Bedingungen abhängt. Insbesondere kohlenstoffhaltige Partikel mit kleinen Durchmessern, die auch als Feinstaub bezeichnet werden, sollen für Erkrankungen von Mensch und Tier verantwortlich sein. Unter Feinstaub werden hier insbesondere Partikel verstanden, deren mittlerer Durchmesser 100 Nanometer oder weniger beträgt. Kohlenstoffhaltige Partikel umfassen insbesondere auch Kohlenstoffpartikel gegebenenfalls mit angelagerten Kohlenwasserstoffen.

Zur Reduktion der Partikelemissionen insbesondere in Kraftfahrzeugen werden oftmals so genannte geschlossene Partikelfilter eingesetzt, bei denen eine Struktur von Abgas durchströmt wird, die wechselweise verschlossene Kanäle und zwischen den Kanälen poröse Wände aufweist. Um einen möglichst geringen Gegendruck des Partikelfilters auch im bereits beladenen Zustand zu gewährleisten, müssen Porositäten eingesetzt werden, die gerade den Feinstaub im Wesentlichen noch ungefiltert passieren lassen.

Es ist auch bekannt, dass durch die Bereitstellung eines elektrischen Feldes und/oder eines Plasmas eine Agglomeration von kleinen Rußpartikeln zu größeren Rußpartikeln und/oder eine elektrische Ladung bei Rußpartikeln bewirkt werden. Elektrisch geladene Rußpartikel und/oder größere Rußpartikel sind regelmäßig in einem Filtersystem deutlich einfacher abzuscheiden. Rußpartikel-Agglomerate werden aufgrund ihrer größeren Massenträgheit in einer Abgasströmung träger transportiert und lagern sich an Umlenkstelle einer Abgasströmung somit einfacher ab. Elektrisch geladene Rußpartikel werden aufgrund ihrer Ladung hin zu entgegengesetzt geladenen Oberflächen gezogen, an welchen sie anlagern und ihre Ladung abgeben. Auch dies erleichtert die Entfernung von Rußpartikeln aus dem Abgasstrom im Betrieb von Kraftfahrzeugen mit verschiedenen Filter- oder Abscheideeinrichtungen.

Die Wirksamkeit eines elektrischen Feldes für die beschriebenen Vorgänge hängt unter anderem von der Feldstärke, der Homogenität des elektrischen Feldes im Wirkungsbereich und seiner Reproduzierbarkeit über lange Zeiträume ab. Je höher die angewandten Spannungen sind, desto höher ist zwar die Wirksamkeit, jedoch nehmen auch die Schwierigkeiten bei der Isolation, der Vermeidung von Kurzschlüssen und unerwünschten Spannungsüberschlägen zu. Dies trifft für alle bekannten Anordnungen des elektrischen Feldes in einem Abgasreinigungssystem mehr oder weniger stark zu. Dazu kommt, dass bei einem Kurzschluss oder einem Spannungsüberschlag, auch Lichtbogen genannt, das elektrische Feld zumindest zeitweise zusammenbrechen kann, so dass für solche Zeiträume die Funktion des Systems nicht gewährleistet ist.

JP 2003-172123 A offenbart eine Abgasbehandlungsvorrichtung mit einer Ionisationselektrode und eine im Abgasstrom nachgeordnete Abscheidevorrichtung mit Abscheideelementen und Entladungselektroden. Die Abscheideelemente sind elektrisch geerdet. Jeweils nach einem Abscheideelement ist in der Abgasleitung eine Entladungselektrode angeordnet, die mit einem Isolator beschichtet ist. Im Betrieb werden Partikel im Abgas durch in dem durch die Ionisationselektrode erzeugten elektrischen Feld elektrisch geladen und lagern sich danach auf den Abscheideelemente ab. Die Abscheideelemente filtern somit die geladenen Partikel aus dem Abgasstrom. Wenn die abgeschiedenen Partikel nicht durch eine katalytische Beschichtung auf den Abscheideelementen umgesetzt werden können und eine Verstopfung droht, wird eine Wechselspannung an die Entladeelektroden angelegt, so dass die abgeschiedenen Partikel aufgrund einer dielektrischen Barriereentladung zwischen den Abscheideelementen und Entladeelektroden umgesetzt werden.

Der hier vorliegenden Erfindung liegt nunmehr die Aufgabe zugrunde, die geschilderten Probleme zumindest teilweise zu lösten und insbesondere eine gegenüber dem Stand der Technik verbesserte Vorrichtung zur Erzeugung eines elektrischen Feldes für ein mobiles Abgasbehandlungssystem zu offenbaren. Darüber hinaus soll ein Verfahren zur Behandlung eines Abgases angegeben werden.

Diese Aufgaben werden gelöst mit einer Vorrichtung gemäß den Merkmalen des Patentanspruchs 1 sowie einem Verfahren gemäß den Merkmalen des Patentanspruchs 9. Weitere vorteilhafte Ausgestaltungen der Vorrichtung und des Verfahrens sind in den jeweils abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung zur Verringerung von Rußpartikeln in einem Abgas, insbesondere einem Abgas eines Verbrennungsmotors, weist wenigstens eine erste zumindest teilweise elektrisch leitfähige Struktur, eine zweite zumindest teilweise elektrisch leitfähige Struktur, einen Zwischenraum zwischen der ersten Struktur und der zweiten Struktur, eine Hochspannungsquelle zur Ausbildung eines elektrischen Potentials zwischen der ersten Struktur und der zweiten Struktur auf, wobei in dem Zwischenraum mindestens eine zumindest teilweise elektrisch leitfähige Zwischenstruktur angeordnet ist, auf der ein Zwischenpotential ausgebildet werden kann.

Die elektrisch leitfähige Zwischenstruktur erlaubt es, durch ihre Form und/oder ihr Potential das elektrische Feld in dem Zwischenraum zu beeinflussen. So kann diese Zwischenstruktur eingesetzt werden, um das elektrische Feld möglichst homogen zu gestalten oder auch, um das elektrische Feld zwischen der ersten Struktur und der zweiten Struktur inhomogen zu strukturieren. Im einfachsten Fall kann die Zwischenstruktur mittig in dem Zwischenraum angeordnet werden und dabei ein Potential in der Mitte zwischen den Potentialen der ersten Struktur und der zweiten Struktur erhalten. Dies führt zu einer Homogenisierung des elektrischen Feldes, was für manche Anwendungen vorteilhaft ist. Die Zwischenstruktur kann jedoch auch dazu eingesetzt werden, das elektrische Feld sowohl in Strömungsrichtung eines Abgases als auch senkrecht dazu, also in radialer Richtung, inhomogen zu gestalten. Da eine Abgasströmung in einem Gehäuse keineswegs homogen ist, kann auf diese Weise bei Bedarf die Form des elektrischen Feldes an die Strömungsverhältnisse angepasst, z. B. zur Mitte der Strömung hin konzentriert werden.

In einer vorteilhaften Weiterbildung der Erfindung sind die erste Struktur, die Zwischenstruktur und die zweite Struktur in Abgasströmungsrichtung hintereinander angeordnet, so dass die Strukturen nacheinander vom Abgas durchströmt werden können. Auf diese Weise können die Strukturen jeweils an die vorherrschende Strömungssituation angepasst werden. Die Strukturen können aber jeweils auch so angepasst werden, dass sie die Strömung einzeln beeinflussen können.

Bevorzugt sind sowohl die erste Struktur, die zweite Struktur, als auch die Zwischenstruktur für das Abgas durchströmbar. Besonders bevorzugt ist in diesem Zusammenhang, dass die erste Struktur, die zweite Struktur und die Zwischenstruktur die Abgasströmung im Querschnitt vollständig überdecken, so dass insbesondere die Strukturen von dem Abgas jeweils einzeln nacheinander vollständig von dem ganzen Abgas durchströmt werden können.

In einer bevorzugten Ausführungsform der Erfindung weist mindestens eine der Strukturen mehrere für ein Abgas durchströmbare Kanäle auf, wobei insbesondere eine Ausbildung als Wabenkörper in Betracht kommt. Wabenkörper sind im Stand der Technik als erste Struktur und als zweite Struktur bereits vorgeschlagen worden, wobei insbesondere die zweite Struktur als Partikelfalle ausgebildet sein kann. Als Partikelfalle ausgebildete Wabenkörper sind im Stand der Technik in vielen Ausführungsformen bekannt und können, soweit sie zumindest teilweise elektrisch leitfähig sind, auch für die vorliegende Erfindung als zweite Struktur Anwendung finden. Für die erste Struktur und die Zwischenstruktur kommen insbesondere aus Blechlagen gebildete Wabenkörper mit für ein Abgas durchströmbaren Kanälen in Betracht, wie sie im Stand der Technik ebenfalls zahlreich bekannt sind.

Es ist besonders bevorzugt, dass zumindest die erste Struktur mehrere für ein Abgas durchströmbare Kanäle aufweist, wobei insbesondere die erste Struktur und die Zwischenstruktur mehrere für ein Abgas durchströmbare Kanäle aufweisen. Alternativ ist besonders bevorzugt, dass die erste Struktur und die zweite Struktur mehrere für ein Abgas durchströmbare Kanäle aufweisen. In einer weiteren Ausführungsform können auch alle Strukturen mehrere für ein Abgas durchströmbare Kanäle aufweisen.

Erfindungsgemäß können bevorzugt alle oder ein Teil der Strukturen ganz oder teilweise mit einer katalytisch aktiven Beschichtung versehen sein. Insbesondere kommen als erste und zweite Struktur Wabenkörper mit katalytischen Beschichtungen in Frage, die in typischen Abgasreinigungssystemen von Kraftfahrzeugen Anwendung finden. Die Zwischenstruktur hingegen stellt im Allgemeinen keine große Oberfläche bereit, sondern ist als in Strömungsrichtung kurze Scheibe ausgebildet, so dass eine katalytisch aktive Beschichtung wenig Bedeutung hat. Die Zwischenstruktur kann auch als Drahtgitter oder als mäanderförmiger Draht ausgebildet sein.

Typische Anordnungen zur Ionisation in einem Abgas, wie sie hier beschrieben werden, weisen im elektrischen Feld Elektroden auf, an deren Spitzen besonders hohe elektrische Felder auftreten, was die Ablösung von Elektronen und damit die Ionisation begünstigt. Erfindungsgemäß bevorzugt weist auch die erste Struktur eine erste Gruppe von Elektroden auf, die zur Ausbildung von Spitzenentladungen geformt und ausgerichtet sind. Besonders bevorzugt weist auch die Zwischenstruktur eine zweite Gruppe von Elektroden auf, wobei alle Elektroden so geformt und ausgerichtet sind, dass sie Spitzenentladungen bei Anlegen einer Hochspannung zwischen erster Struktur und Zwischenstruktur bzw. zwischen Zwischenstruktur und zweiter Struktur erzeugen können. Bei Verwendung von mehreren Zwischenstrukturen können so ganze Serien von Elektrodengruppen im Abgas angeordnet werden, was eine gleichmäßige Ionisierung begünstigt.

Bevorzugt sind die erste Struktur und die mindestens eine Zwischenstruktur elektrisch isoliert in einem Gehäuse angeordnet und mittels elektrisch isolierter Durchführungen mit der Hochspannungsquelle verbunden. Eine elektrische Isolierung im Inneren des Gehäuses im Bereich des Zwischenraumes verhindert unerwünschte Verformungen des elektrischen Feldes und Spannungsüberschläge zwischen den Strukturen und dem Gehäuse. Besonders bevorzugt ist die Hochspannungsquelle mit einem oder mehreren Spannungsteilern ausgestattet, wobei ein wahlweises Abtrennen der ersten Struktur oder der Zwischenstruktur von der Hochspannungsquelle durch Schalter ermöglicht wird.

In einer weiteren Ausführungsform der Erfindung sind im Zwischenraum mindestens zwei mit Abstand voneinander angeordnete Zwischenstrukturen vorhanden, was eine noch bessere an verschiedene Anwendungen anpassbare Form des elektrischen Feldes ermöglicht.

Die Erfindung betrifft auch ein Verfahren zur Behandlung eines Rußpartikel aufweisenden Abgases, insbesondere mit einer Vorrichtung, wie sie oben beschrieben wurde. Dabei strömt das Abgas von einer ersten Struktur zu einer zweiten Struktur und es wird wenigstens zeitweise eine Hochspannung zwischen der ersten Struktur und der zweiten Struktur angelegt, so dass wenigstens ein Teil der Rußpartikel im Abgas ionisiert oder agglomeriert wird und auf der zweiten Struktur abgelagert wird. Erfindungsgemäß wird zumindest zeitweise eine Zwischenstruktur, die in einem Zwischenraum zwischen der ersten Struktur und der zweiten Struktur angeordnet ist, mit einer Hochspannung beaufschlagt, die einen Wert zwischen den Potentialen der ersten und zweiten Struktur hat. Auf diese Weise wird der axiale und/oder radiale Verlauf des elektrischen Feldes zwischen der ersten und der zweiten Struktur beeinflusst, so dass für jeden Anwendungsfall günstige Feldverläufe erzeugt werden können.

Dabei bietet die Erfindung auch die Möglichkeit, das Potential der Zwischenstruktur zu variieren und dadurch an verschiedene Betriebsbedingungen anzupassen. Auf diese Weise ist sogar eine Regenerierung von verschmutzten oder ungleichmäßig abgebrannten Elektroden der ersten Struktur möglich. Bei mehreren Zwischenstrukturen mit eigenen Gruppen von Elektroden können auch diese durch Variation der jeweils an den Zwischenstrukturen anliegenden Spannung auf verschiedene Weise betrieben werden. Bei Anwenden einer relativ hohen Gesamtspannung zwischen erster und zweiter Struktur, bspw. 10 kV (Kilovolt) kann die Spannung durch Zwischenstrukturen so unterteilt werden, dass selbst bei vereinzelt auftretenden Spannungsüberschlägen der Rest des Systems die Abgasreinigung aufrecht erhält.

Im Folgenden wird die Erfindung anhand eines Ausführungsbeispiels, auf das sie jedoch nicht beschränkt ist, näher erläutert.

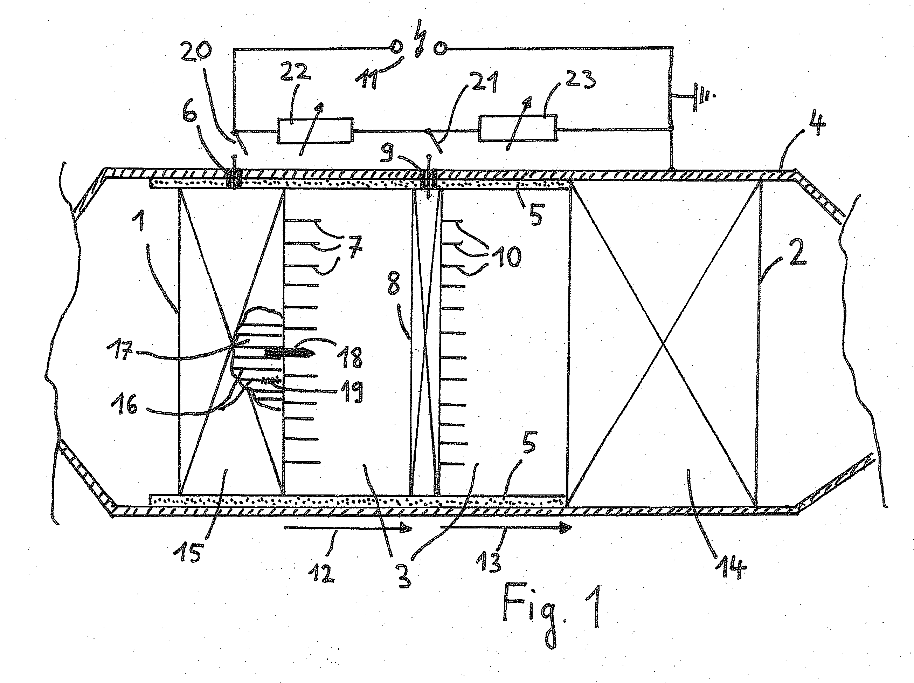

Es zeigt die Fig. 1 den schematischen Aufbau einer erfindungsgemäßen Vorrichtung mit einer Zwischenstruktur.

Eine erste Struktur 1 und eine zweite Struktur 2 sind mit einem Zwischenraum 3 in einem Gehäuse 4 angeordnet. Im vorliegenden Ausführungsbeispiel ist die zweite Struktur 2 mit dem Gehäuse 3 elektrisch verbunden und bildet ein Bezugspotential, auch als Masse bezeichnet. Eine elektrische Isolierung 5 trennt die erste Struktur 1 vom Gehäuse 4 und erstreckt sich auch an der Innenseite des Gehäuses 4 über den gesamten Zwischenraum 3. Die erste Struktur 1 kann über eine erste Durchführung 6 mit einer Hochspannungsquelle 11 verbunden und mit einer positiven oder negativen Hochspannung beaufschlagt werden, bspw. 2,5 bis 25 kV, vorzugsweise 5 bis 15 kV. Die erste Struktur 1 ist mit einer ersten Gruppe von Elektroden 7 ausgestattet, die bei Anlegen einer Hochspannung zu Spitzenentladungen in dem Zwischenraum 3 führen, was eine Ionisation eines zu reinigenden Abgases begünstigt. Die frei werdenden Elektronen werden durch ein anliegendes elektrisches Feld in den Zwischenraum 3 beschleunigt, was zu Ionisation von Atomen oder Molekülen des zu reinigenden Abgases führt. In dem Zwischenraum 3 ist eine Zwischenstruktur 8 angeordnet, welche ebenfalls elektrisch isoliert vom Gehäuse 4 ist und über eine zweite Durchführung 9 ebenfalls mit einer Hochspannung beaufschlagt werden kann. Die folgenden Ausführungen haben sinngemäß auch Gültigkeit bei der Anwendung von zwei oder mehr Zwischenstrukturen.

Die Hochspannungsquelle 11 ist mit einem Spannungsteiler ausgestattet, der schematisch im einfachsten Fall aus einem ersten Widerstand 22 und einem zweiten Widerstand 23 besteht. Über dem ersten Widerstand 22 fällt eine erste Teilspannung 12 ab, über dem zweiten Widerstand 23 eine zweite Teilspannung 13. Wenn der erste Widerstand 22 und/oder der zweite Widerstand 23, wie in der Zeichnung angedeutet, regelbar sind, kann die Aufteilung der Gesamtspannung der Hochspannungsquelle 11 auf die erste Teilspannung 12 und die zweite Teilspannung 13 variiert und auf einen gewünschten Wert eingestellt werden. Im einfachsten Fall erreicht man damit eine homogenere Verteilung des elektrischen Feldes im Zwischenraum 3, bspw. wenn sich die Zwischenstruktur 8 exakt in der Mitte zwischen der ersten Struktur 1 und der zweiten Struktur 2 befindet und die Zwischenstruktur 8 auch mit einer Spannung in der Mittel zwischen dem Potential der ersten Struktur 1 und dem der zweiten Struktur 2 eingestellt wird. Es ist aber möglich, das elektrische Feld in der Nähe der ersten Struktur 1 und der ersten Gruppe von Elektroden 7 zu erhöhen, indem für die Zwischenstruktur 8 ein näher am Potential der zweiten Struktur 2 liegendes Potential gewählt wird.

Im dargestellten Ausführungsbeispiel trägt die Zwischenstruktur 8 eine zweite Gruppe von Elektroden 10, wodurch bei geeigneter Wahl der ersten Teilspannung 12 und der zweiten Teilspannung 13 zwei Gruppen von Spitzenentladungen im zu reinigenden Abgas bereitgestellt werden. Dies bietet verschiedene vorteilhafte Möglichkeiten, die Vorrichtung an unterschiedliche Betriebsbedingungen und Anforderungen anzupassen.

Typischerweise ist die zweite Struktur 2 als Filterkörper 14 ausgebildet und dient der Abscheidung von Rußpartikeln, die im Zwischenraum 3 ionisiert und/oder agglomeriert wurden. Eine katalytisch aktive Beschichtung unterstützt die Umsetzung der Rußpartikel und die Regeneration des Filterkörpers 14. Die erste Struktur 1 ist typischerweise als metallischer Wabenkörper 15 aus strukturierten Blechlagen 16 mit darin befestigten Stiftelektroden 18 ausgestaltet. Auch er kann mit einer katalytisch aktiven Beschichtung 19 versehen sein.

Die vorliegende Erfindung ermöglicht eine gleichmäßige und an verschiedene Betriebsbedingungen anpassbare Abgasreinigung mit geringer Störanfälligkeit bei der Verwendung von ionisierenden Hochspannungen.

### Bezugszeichenliste

- 1: Erste Struktur
- 2: Zweite Struktur
- 3: Zwischenraum
- 4: Gehäuse
- 5: Elektrische Isolierung
- 6: Erste Durchführung
- 7: Erste Gruppe von Elektroden
- 8: Zwischenstruktur
- 9: Zweite Durchführung
- 10: Zweite Gruppe von Elektroden
- 11: Hochspannungsquelle
- 12: Erste Teilspannung
- 13: Zweite Teilspannung
- 14: Filterkörper
- 15: Wabenkörper
- 16: Strukturierte Blechlagen
- 17: Von Abgas durchströmbare Kanäle
- 18: Stiftelektroden
- 19: Katalytisch aktive Beschichtung
- 20: Erster Schalter
- 21: Zweiter Schalter
- 22: Erster Widerstand
- 23: Zweiter Widerstand

## Patentansprüche

1. Vorrichtung zur Verringerung von Rußpartikeln in einem Abgas, insbesondere einem Abgas eines Verbrennungsmotors, aufweisend wenigstens eine erste zumindest teilweise elektrisch leitfähige Struktur (1), eine zweite zumindest teilweise elektrisch leitfähige Struktur (2), einen Zwischenraum (3) zwischen der ersten Struktur (1) und der zweiten Struktur (2), eine Hochspannungsquelle (11) zur Ausbildung eines elektrischen Potentials zwischen der ersten Struktur (1) und der zweiten Struktur (2), **dadurch gekennzeichnet, dass** in dem Zwischenraum (3) mindestens eine zumindest teilweise elektrisch leitfähige Zwischenstruktur (8) angeordnet ist, auf der ein Zwischenpotential ausgebildet werden kann, wobei es die elektrisch leitfähige Zwischenstruktur (8) erlaubt, durch ihre Form und/oder ihr Potential das elektrische Feld in dem Zwischenraum (3) zu beeinflussen.

2. Vorrichtung nach Anspruch 1, bei der mindestens eine der Strukturen (1, 2, 8) mehrere für ein Abgas durchströmbare Kanäle (17) umfasst.

3. Vorrichtung (1) nach einem der vorhergehenden Ansprüche, bei der mindestens eine der Strukturen (1, 2, 8) als Wabenkörper (15) ausgebildet ist.

4. Vorrichtung nach einem der vorhergehenden Ansprüche, bei der mindestens eine der Strukturen (1, 2, 8) zumindest teilweise eine katalytisch aktive Beschichtung (19) aufweist.

5. Vorrichtung nach einem der vorhergehenden Ansprüche, bei der die erste Struktur (1) eine erste Gruppe von Elektroden (7) und die mindestens eine Zwischenstruktur (8) eine zweite Gruppe von Elektroden (10) aufweist, wobei die Elektroden jeder Gruppe (7, 10) so geformt und ausgerichtet sind, dass sie Spitzenentladungen bei Anlegen einer Hochspannung zwischen erster Struktur (1) und Zwischenstruktur (8) bzw. zwischen Zwischenstruktur (8) und zweiter Struktur (2) erzeugen können.

6. Vorrichtung nach einem der vorhergehenden Ansprüche, wobei die erste Struktur (1) und die mindestens eine Zwischenstruktur (8) elektrisch isoliert in einem Gehäuse (4) angeordnet und mittels elektrisch isolierter Durchführungen (6, 9) mit der Hochspannungsquelle (11) verbunden sind.

7. Vorrichtung nach einem der vorhergehenden Ansprüche, bei der Schalter (20, 21) vorhanden sind, die ein wahlweises Abtrennen der ersten Struktur (1) oder der Zwischenstruktur (8) von der Hochspannungsquelle (11) ermöglichen.

8. Vorrichtung nach einem der vorhergehenden Ansprüche, wobei mindestens zwei mit Abstand voneinander im Zwischenraum (3) angeordnete Zwischenstrukturen (8) vorhanden sind.

9. Verfahren zur Behandlung eines Rußpartikel aufweisenden Abgases, insbesondere mit einer Vorrichtung gemäß einem der vorhergehenden Ansprüche, wobei das Abgas von einer ersten Struktur (1) zu einer zweiten Struktur (2) strömt und wenigstens zeitweise eine Hochspannung zwischen der ersten Struktur (1) und der zweiten Struktur (2) angelegt wird, so dass wenigstens ein Teil der Rußpartikel im Abgas ionisiert oder agglomeriert wird und auf der zweiten Struktur (2) abgelagert wird, **dadurch gekennzeichnet, dass** zumindest zeitweise eine Zwischenstruktur (8), die in einem Zwischenraum (3) zwischen der ersten Struktur (1) und der zweiten Struktur (2) angeordnet ist, mit einer Hochspannung beaufschlagt wird, die einen Wert zwischen den Potentialen der ersten (1) und zweiten (2) Struktur hat.

10. Verfahren nach Anspruch 9, wobei das Potential der Zwischenstruktur (8) variiert wird.

## Claims

1. Apparatus for reducing soot particles in an exhaust gas, in particular in an exhaust gas of an internal combustion engine, having at least a first at least partially electrically conductive structure (1), a second at least partially electrically conductive structure (2), an intermediate space (3) between the first structure (1) and the second structure (2), a high-voltage source (11) for creating an electric potential between the first structure (1) and the second structure (2), **characterized in that** at least one at least partially electrically conductive intermediate structure (8), on which an intermediate potential can be created, is arranged in the intermediate space (3), wherein the electrically conductive intermediate structure (8) makes it possible, as a result of its shape and/or its potential, to influence the electric field in the intermediate space (3).

2. Apparatus as claimed in claim 1, in which at least one of the structures (1, 2, 8) has a plurality of channels (17) through which an exhaust gas can flow.

3. Apparatus (1) as claimed in one of the preceding claims, in which at least one of the structures (1, 2, 8) is formed as a honeycomb body (15).

4. Apparatus as claimed in one of the preceding claims, in which at least one of the structures (1, 2, 8) has a catalytically active coating (19), at least in part.

5. Apparatus as claimed in one of the preceding claims, in which the first structure (1) has a first group of electrodes (7) and the at least one intermediate structure (8) has a second group of electrodes (10), wherein the electrodes of each group (7, 10) are shaped and aligned such that they can generate point discharges when a high voltage is applied between the first structure (1) and the intermediate structure (8) or between the intermediate structure (8) and the second structure (2).

6. Apparatus as claimed in one of the preceding claims, wherein the first structure (1) and the at least one intermediate structure (8) are arranged in a housing (4) in an electrically insulated manner and are connected by means of electrically insulated bushings (6, 9) to the high-voltage source (11).

7. Apparatus as claimed in one of the preceding claims, in which switches (20, 21) are provided, which enable selective disconnection of the first structure (1) or of the intermediate structure (8) from the high-voltage source (11).

8. Apparatus as claimed in one of the preceding claims, wherein at least two intermediate structures (8) arranged at a distance from one another in the intermediate space (3) are provided.

9. Method for treating an exhaust gas comprising soot particles, in particular using an apparatus as claimed in one of the preceding claims, wherein the exhaust gas flows from a first structure (1) to a second structure (2) and a high voltage is applied, at least temporarily, between the first structure (1) and the second structure (2) so that at least some of the soot particles in the exhaust gas are ionized or agglomerated and are deposited on the second structure (2), **characterized in that** a high voltage is applied, at least temporarily, to an intermediate structure (8) that is arranged in an intermediate space (3) between the first structure (1) and the second structure (2), said high voltage having a value between the potentials of the first (1) and second (2) structure.

10. Method as claimed in claim 9, wherein the potential of the intermediate structure (8) is varied.

## Revendications

1. Dispositif pour réduire les particules de suie dans un gaz d'échappement, en particulier un gaz d'échappement d'un moteur à combustion interne, présentant au moins une première structure (1) au moins partiellement électriquement conductrice, une deuxième structure (2) au moins partiellement électriquement conductrice, un espace intermédiaire (3) entre la première structure (1) et la deuxième structure (2), une source de haute tension (11) pour établir un potentiel électrique entre la première structure (1) et la deuxième structure (2), **caractérisé en ce que** dans l'espace intermédiaire (3) est disposée au moins une structure intermédiaire (8) au moins partiellement électriquement conductrice, sur laquelle peut être établi un potentiel intermédiaire, celui-ci permettant à la structure intermédiaire (8) électriquement conductrice, de par sa forme et/ou son potentiel, d'influencer le champ électrique dans l'espace intermédiaire (3).

2. Dispositif selon la revendication 1, dans lequel au moins l'une des structures (1, 2, 8) comprend plusieurs canaux (17) pouvant être parcourus par un gaz d'échappement.

3. Dispositif (1) selon l'une quelconque des revendications précédentes, dans lequel au moins l'une des structures (1, 2, 8) est réalisée sous forme de corps en nid d'abeilles (15).

4. Dispositif selon l'une quelconque des revendications précédentes, dans lequel au moins l'une des structures (1, 2, 8) présente au moins en partie un revêtement catalytiquement actif (19).

5. Dispositif selon l'une quelconque des revendications précédentes, dans lequel la première structure (1) présente un premier groupe d'électrodes (7) et l'au moins une structure intermédiaire (8) présente un deuxième groupe d'électrodes (10), les électrodes de chaque groupe (7, 10) étant formées et orientées de telle sorte qu'elles puissent produire des pointes de décharges lors de l'application d'une haute tension entre la première structure (1) et la structure intermédiaire (8) ou entre la structure intermédiaire (8) et la deuxième structure (2).

6. Dispositif selon l'une quelconque des revendications précédentes, dans lequel la première structure (1) et l'au moins une structure intermédiaire (8) sont disposées de manière électriquement isolée dans un boîtier (4) et sont connectées au moyen de passages électriquement isolés (6, 9) à la source de haute tension (11).

7. Dispositif selon l'une quelconque des revendications précédentes, dans lequel des commutateurs (20, 21) sont prévus, lesquels permettent une coupure sélective de la première structure (1) ou de la structure intermédiaire (8) vis-à-vis de la source de haute tension (11).

8. Dispositif selon l'une quelconque des revendications précédentes, dans lequel au moins deux structures intermédiaires (8) disposées à distance l'une de l'autre dans l'espace intermédiaire (3) sont prévues.

9. Procédé de traitement d'un gaz d'échappement présentant des particules de suie, en particulier avec un dispositif selon l'une quelconque des revendications précédentes, dans lequel le gaz d'échappement s'écoule depuis une première structure (1) jusqu'à une deuxième structure (2) et une haute tension est au moins temporairement appliquée entre la première structure (1) et la deuxième structure (2), de telle sorte qu'au moins une partie des particules de suie dans le gaz d'échappement soit ionisée ou agglomérée et se dépose sur la deuxième structure (2), **caractérisé en ce qu'**au moins temporairement, une structure intermédiaire (8), qui est disposée dans un espace intermédiaire (3) entre la première structure (1) et la deuxième structure (2), est sollicitée avec une haute tension qui présente une valeur comprise entre les potentiels de la première (1) et de la deuxième (2) structure.

10. Procédé selon la revendication 9, dans lequel le potentiel de la structure intermédiaire (8) est varié.
